# EUROPÄISCHE PATENTSCHRIFT

(11) **EP 0 340 436 B1**
(45) Veröffentlichungstag und Bekanntmachung des Hinweises auf die Patenterteilung: **22.09.1993**
(21) Anmeldenummer: 89104957.9
(22) Anmeldetag: 20.03.1989
(51) Int. Cl.: B29B 7/42

(54) **Verfahren zum Mischen von Isocyanat und Polyol zu einem zu Polyurethan ausreagierenden Gemisch**
Method for mixing isocyanate and polyol for forming a mixture reacting to form a polyurethane
Procédé pour mélanger un isocyanate et un polyol pour obtenir un mélange réagissant pour former du polyuréthane

(30) Priorität: 03.05.1988 DE 3814993
(43) Veröffentlichungstag der Anmeldung: 08.11.1989
(73) Patentinhaber: Klöckner Ferromatik Desma GmbH, 79364 Malterdingen (DE)
(72) Erfinder: Rebers, Günter, Dipl.-Ing., D-2807 Achim (DE)
(74) Vertreter: Röther, Peter, Dipl.-Phys.

(56) Entgegenhaltungen:
- AU-A- 54 433
- DE-A- 1 949 756
- DE-A- 2 056 435
- US-A- 2 857 144
- US-A- 2 970 817
- US-A- 3 212 128
- US-A- 3 393 052
- US-A- 3 752 449
- US-A- 3 774 887
- US-A- 3 902 850

## Beschreibung

Die Erfindung betrifft ein Verfahren zum Mischen von Isocyanat und Polyol zu einem zu Polyurethan ausreagierenden Gemisch, mit einer in einem Zylinder rotierenden, sich zum Austragsende des Zylinders konisch verjüngenden und komplementär zum Zylinderinnenraum ausgebildeten und nach Beendigen des Mischens axial verschiebbaren Schnecke.

Es ist bekannt (DE-PS 2 062 008) zum Mischen von Isocyanat und Polyol zu einem zu Polyurethan ausreagierenden Gemisch Mischvorrichtungen zu benutzen, die eine Mischschnecke aufweisen, die mindestens im Bereich ihres, dem Austragsende des Zylinders benachbarten Abschnitt sich konisch verjüngt, wobei der Zylinder komplementär zu der Schnecke ausgebildet ist und der mit der Schnecke gekoppelte Antrieb in einer Kulissenführung axial verschiebbar in der Vorrichtung angeordnet ist.

Derartige Mischvorrichtungen werden beispielsweise an Schuhbesohlungsmaschinen eingesetzt, in denen an Schuhschäfte Sohlen angeformt werden, die eine Laufsohle aus abriebfestem Polyurethan und eine elastische Zwischensohle aus Polyurethan aufweisen. Derartige Maschinen sind als Rundtischanlagen ausgebildet und weisen mehrere Stationen mit entsprechenden Formen zum Formen der Schuhsohlen auf, wobei sie in den Fällen, in denen zunächst die Laufsohle geformt und anschließend die Zwischensohle gebildet wird, einen Leisten für die aufzuziehenden Schuhschäfte, zwei Seitenformteile, einen Bodenstempel und einen Gegenstempel aufweisen, wobei jeweils ein Leisten- und ein Gegenstempel auf einem verschwenkbaren Drehkopf angeordnet sind, der an der Schuhbesohlungsmaschine höhenverstellbar angeordnet ist.

Während des Formens der Laufsohle begrenzen die beiden Seitenformteile in ihrer Schließstellung, der Bodenstempel und der Gegenstempel einen Formenhohlraum, dessen Volumen etwas größer ist als das Volumen der Laufsohle aus ausreagiertem Gemisch, wobei die beiden Seitenformteile in ihrer Schließstellung eine Angußbohrung begrenzen, durch die das ausreagierende Gemisch für die Laufsohle in den gebildeten Formenhohlraum eingeleitet wird. Anschließend wird der Formenhohlraum auf das Volumen der fertigen Laufsohle verkleinert, wobei gleichzeitig der Bodenstempel die Angußbohrung verschließt. Nach einem hinreichenden Verfestigen des Materials der Laufsohle werden die Seiten der Formteile aufgefahren, der Drehkopf so verschwenkt und so verfahren, daß der Leisten mit einem aufgezogenen Schaft auf der wieder in Schließstellung gebrachten Seitenformteilen aufsteht, so daß der aufgeleistete Schaft, die Seitenformteile und die auf dem Bodenstempel befindliche Laufsohle einen Formenhohlraum zum Bilden der Zwischensohle begrenzen, wobei die Seitenformteile eine zweite Angußbohrung begrenzen, über die das zu der Zwischensohle ausreagierende und ausschäumende Gemisch zugeführt wird.

Während des Mischens des Isocyanats und des Polyols setzen bereits die chemischen Reaktionen ein, so daß ein Teil des Gemisches auf der Zylinderinnenwand sich niederschlägt und einen festen, mit der Zeit dicker werdenden Film aus Polyurethan bildet. Dies führt dazu, daß der für das Mischen notwendige Spalt zwischen der Zylinderwandung und der Schnecke zuwächst. Aus diesem Grunde ist es erforderlich, zum Aufrechterhalten eines Spaltes mit einer vorgegebenen Mindestspaltbreite den Film zumindest teilweise abzutragen. Das geschieht in der Weise, daß die Schnecke in Richtung zum Austragsende des Zylinders verschoben wird und während dieser Bewegung ausreagiertes auf der Innenwandung des Zylinders gebildetes Gemisch abträgt. Dies erfolgt in den Zeitintervallen, in denen das Mischaggregat außer Eingriff mit den Angußbohrungen der Formen steht. Die Zufuhr von Isocyanat und Polyol erfolgt über zugeordnete Ventile jeweils in dosierten Mengen während der einzelnen Mischintervalle.

Durch diese bekannte Maßnahme kann zwar erreicht werden, daß eine Mindestspaltbreite nicht unterschritten wird, es war jedoch bisher nicht möglich, ein Nachtropfen von nicht ausreagiertem Gemisch aus der Vorrichtung zu unterbinden.

Dies ist insbesondere dann störend, wenn Formen zum Einsatz kommen, die auf der Maschine durch einen Gießvorgang der Mischvorrichtung mit den vorgegebenen Mengen des Komponentengemisches gefüllt werden. Es zeigte sich nunmehr überraschenderweise, daß dieses Problem dadurch lösbar ist, daß die Schnecke mit einer im wesentlichen lotrechten Achse betrieben wird und gegen Ende des Förderns des auszureagierenden Gemisches in die Form bei rotierender Schnecke in axialer Richtung kurzzeitig mindestens einmal axial in Richtung zum Austragsende und dann wieder in die Arbeitsposition verschoben wird. Dies erfolgt am Ende eines jeden Misch- und Fördervorganges.

Es war völlig überraschend, daß die Anordnung der Schnecke mit lotrechter Achse das Problem löst.

Hierbei ist es nicht erforderlich, daß die Achse exakt lotrecht ausgerichtet ist, sie kann eine wenn auch geringfügige Abweichung der Achse der Schnecke von der Lotrechten aufweisen.

Im Sinne der Erfindung ist deshalb unter einer im wesentlichen mit lotrechter Achse betriebenen Schnecke zu verstehen, daß eine Abweichung aus der lotrechten Anordnung insoweit zulässig ist, sofern hierdurch der erfindungsgemäße Effekt sichergestellt ist.

## Patentansprüche

1. Verfahren zum Mischen von Isocyanat und Polyol zu einem zu Polyurethan ausreagierenden Gemisch mit einer in einem Zylinder rotierenden, sich zum Austragsende des Zylinders konisch verjüngenden und komplementär zum Zylinderinnenraum ausgebildeten und axial verschiebbaren Schnecke,
dadurch gekennzeichnet,
daß die Schnecke mit im wesentlichen lotrechter Achse betrieben wird und gegen Ende des Förderns des auszureagierenden Gemisches in die Form bei rotierender Schnecke in axialer Richtung kurzzeitig mindestens einmal axial in Richtung zum Austragsende und dann wieder in die Arbeitsposition verschoben wird.

## Claims

1. Process for mixing isocyanate and polyol to give a mixture which, when reaction is complete, gives polyurethane, having a screw which rotates in a cylinder, tapers conically towards the output end of the cylinder, is constructed in a manner complementary to the cylinder interior and is axially displaceable, characterized in that the screw is operated with a substantially vertical axis and, towards the end of conveying into the mould the mixture which is to undergo reaction, with the screw rotating, is briefly displaced axially at least once axially in the direction of the output end and then back into the working position.

## Revendications

1. Procédé pour mélanger de l'isocyanate et du polyol en un mélange réactif formant du polyuréthane, avec une vis sans fin déplaçable axialement, tournant dans un cylindre, se rétrécissant de manière conique en direction de l'extrémité de sortie du cylindre, et réalisée de manière complémentaire à l'espace intérieur du cylindre, caractérisé par le fait que la vis sans fin est entraînée avec un axe sensiblement vertical et, vers la fin de l'alimentation du mélange réactif dans le moule, la vis rotative est déplacée peu de temps en direction axiale au moins une fois axialement en direction de l'extrémité de sortie et ensuite à nouveau dans la position de travail.
